# EUROPÄISCHE PATENTSCHRIFT

(11) **EP 0 378 116 B1**
(45) Veröffentlichungstag und Bekanntmachung des Hinweises auf die Patenterteilung: **16.06.1993**
(21) Anmeldenummer: 90100172.7
(22) Anmeldetag: 05.01.1990
(51) Int. Cl.: C03C 17/00, C03C 17/245

(54) **Heissendvergütungsanlage**
Hot end coating apparatus
Appareil pour revêtement à chaud

(30) Priorität: 11.01.1989 DE 3900615
(43) Veröffentlichungstag der Anmeldung: 18.07.1990
(73) Patentinhaber: HARTUNG LABORATOIRE, Encamp (AD)
(72) Erfinder: Hartung, Helmut, Encamp (AD)
(74) Vertreter: Fitzner, Uwe, Dr.

(56) Entgegenhaltungen:
- WO-A-83/03245

## Beschreibung

Die Erfindung betrifft eine Heißendvergütungsanlage zur Oberflächenvergütung von Glasflaschen mit einer tunnelförmigen Bedampfungshaube, durch die sich in Längsrichtung ein Förderband für den Flaschentransport erstreckt und in deren Seitenwänden eine Mehrzahl von in Abständen paarweise gegenüberliegenden Druck- und Ansaugöffnungen wechselweise angeordnet sind, die entweder alleine oder in Verbindung mit einem weiteren Paar Druck- und Ansaugöffnungen einen mit Beschichtungsmittel angereicherten Luftkreislauf bilden, der mit einem Verdichter zur Erzielung einer ausreichend hohen Druckenergie der angereicherten Luft ausgrüstet ist.

Als Beschichtungsmittel zur Oberflächenvergütung dienen überwiegend Organozinnverbindung, die bei hohen Temperaturen auf die Glasoberfläche der Flaschen aufgedampft werden. Die Metallverbindung reagiert mit dem heißen Glas unter Bildung von Metalloxiden, die sich in die Glasoberfläche einlagern und die Festigkeitseigenschaften der Glasflaschen erhöhen.

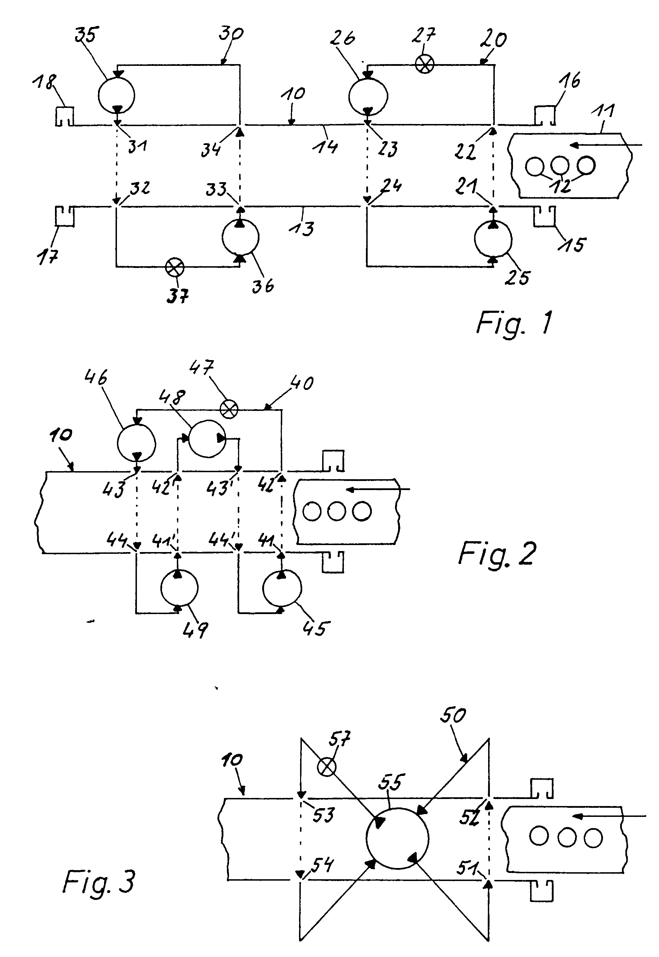

Aus der EP 0 103 019 sowie einem darin beschriebenen Stand der Technik ist eine Heißendvergütungsanlage der eingangsgenannten Art bekannt, die mit entweder nur einem (Fig. 1) oder mit mehreren Luftkreisläufen (Fig. 8) ausgerüstet ist. Bei der Anlage mit nur einem Kreislauf wird die Luft beidseitig der Bedampfungshaube mit Beschichtungsmittel angereichert, bevor sie über zwei Druck- und Ansaugöffnungspaare in das Innere der Bedampfungshaube eingeblasen und wieder abgesaugt wird. Auf diese Weise werden zwischen den Öffnungspaaren zwei entgegengerichtete Strömungsbereiche gebildet, die zusammen die eigentliche Beschichtungszone der Anlage darstellen.

Eine derartige Anlage arbeitet jedoch relativ unwirtschaftlich, da ein die Beschichtungszone gegen Einflüsse von außen schützender Luftvorhang fehlt und aufgrund der beidseitigen Anreicherung mit einem Übermaß an Beschichtungsmittel gearbeitet wird. Dadurch wird die Umwelt unnötig belastet, dem nur mit Hilfe teurer Abscheide- und Rückgewinnungseinrichtungen Abhilfe geschaffen werden kann.

Bei der Ausführungsform gemäß Fig. 8 der bekannten Anlage ist ein die Beschichtungszone schützender Luftvorhang vorhanden, der durch zwei außenliegende und nicht mit Beschichtungsmittel angereicherte Kreisläufe bzw. Schleifen mit jeweils zwei Druck- und Ansaugöffnungspaaren erzeugt wird. Die eigentliche Beschichtung der Flaschen erfolgt mit Hilfe zweier weiterer Innenschleifen, die gemeinsam über eine zentrale Einspeisung mit Beschichtungsmittel angereichert werden. Beide Schleifen verfügen jeweils nur über ein Druck- und Ansaugöffnungspaar zur Erzeugung eines Strömungsbereichs. Die beiden entgegengerichteten Strömungsbereiche bilden zusammen wiederum die eigentliche Beschichtungszone im Inneren der Bedampfungshaube.

Der Vorteil dieser Ausführungsform ist aber im Verhältnis zum Mehraufwand gegenüber der bekannten Anlage mit nur einem Kreislauf relativ gering und beschränkt sich praktisch nur auf die beiden äußeren Luftvorhänge. Eine wirksamere Beschichtung der Flaschen ist dagegen nur bedingt erreichbar, da die beiden Außenschleifen über keine eigene Beschichtungsmitteleinspeisung verfügen und in der aus der Bedampfungshaube abgesaugten Luft nur noch geringe Restanteile des Beschichtungsmittels enthalten sind. Die Wirksamkeit des Beschichtungsverfahrens hängt somit maßgeblich von den beiden inneren Schleifen ab, deren Arbeitsweise sich aber von der eines einzelnen Kreislaufes mit beidseitiger Anreicherung praktisch nicht unterscheidet.

Der Erfindung liegt die Aufgabe zugrunde, eine Heißendvergütungsanlage der gattungsgemäßen Art mit einfachen Mitteln derart zu verbessern, daß eine bessere Wirtschaftlichkeit und Umweltverträglichkeit gewährleistet ist.

Die Aufgabe wird erfindungsgemäß dadurch gelöst, daß bei einer Heißendvergütungsanlage der eingangsgenannten Art in beiden Außenbereichen der Bedampfungshaube ein Luftkreislauf mit wenigstens zwei Paar Druck- und Ansaugöffnungen vorgesehen ist, bei dem die Einspeisung des Beschichtungsmittels in Strömungsrichtung vor der Drucköffnung eines Druck- und Ansaugöffnungspaares erfolgt, das im Innenbereich der Bedampfungshaube angeordnet ist.

Auf diese Weise erzeugen die beiden Kreisläufe im Innenbereich der Bedampfungshaube zwei entgegengerichtete, mit Beschichtungsmittel gleich stark angereicherte Strömungsbereiche und gleichzeitig im Außenbereich zwei, ebenfalls entgegengerichtete Strömungsbereiche mit einem geringeren Anreicherungsgrad, die sowohl eine Schutzfunktion ausüben als auch zur weiteren Erhöhung der Wirksamkeit des Beschichtungsverfahrens beitragen. Dadurch vergrößert sich die Verweilzeit der Flaschen innerhalb der angereicherten Zonen der Bedampfungshaube bei gleichem Durchsatz im Vergleich zu den bekannten Anlagen. Das eingesetzte Beschichtungsmittel wird zudem besser ausgenutzt und demzufolge die Umwelt weniger belastet. Auf zusätzliche Abscheide- und Rückgewinnungseinrichtungen im Ablaufbereich kann dabei verzichtet werden.

Die Wirksamkeit der Anlage kann weiter gesteigert werden, wenn nach einem Vorschlag der Erfindung zwischen dem äußeren Druck- und Ansaugöffnungspaar und dem inneren Druck- und Ansaugöffnungspaar beider Luftkreisläufe zwei weitere Paare von Druck- und Ansaugöffnungen vorgesehen sind. Auf diese Weise erzeugt jeder Luftkreislauf insgesamt 4 Strömungsbereiche, deren Anreicherungsgrad von Innen nach außen abnimmt.

Nach einer bevorzugten Ausgestaltung der Erfindung kann bei Bedarf auch zwischen den beiden außenliegenden Luftkreisläufen wenigstens ein weiterer Luftkreislauf mit vorzugsweise beidseitiger Anreicherung vorgesehen sein.

Der Aufbau der Anlage läßt sich zusätzlich noch dadurch vereinfachen, wenn nach einer weiteren Ausgestaltung der Erfindung beide Luftkreisläufe gemeinsam an einen Verdichter angeschlossen sind und die Einspeisung des Beschichtungsmittels gemeinsam über einen Einspeisepunkt erfolgt.

Ein Ausführungsbeispiel der Erfindung ist in der Zeichnung dargestellt und wird im folgenden näher beschrieben.

Es zeigen
- Fig. 1: die erfindungsgemäße Heißendvergütungsanlage mit zwei Luftkreisläufen in schematischer Darstellung; und
- Fign. 2 - 5: weitere Ausführungsformen der Erfindung in schematischer Darstellung.

Fig. 1 zeigt schematisch eine Heißendvergütungsanlage mit einer tunnelförmigen Bedampfungshaube 10 herkömmlicher Bauart, durch die sich ein Förderband 11 für den Transport aneinandergereihter Flaschen 12 erstreckt. In den Seitenwänden 13, 14 der Bedampfungshaube 10 sind im Ein- und Ausgangsbereich in bekannter Weise paarweise Auslässe 15, 16 und 17, 18 für die Entlüftung der Bedampfungshaube 10 vorgesehen. Hinter dem ersten Auslasspaar 15, 16 in Transportrichtung der Flaschen 12 durchzieht die Bedampfungshaube 10 ein erster Luftkreislauf 20, durch den mit Beschichtungsmittel angereicherte Luft strömt. Der Luftkreislauf 20 besitzt zwei Druck- und Ansaugöffnungspaare 21, 22 und 23, 24, die in den Seitenwänden 13, 14 der Bedampfungshaube 10 angeordnet sind. Die Anordnung ist dergestalt, daß einer Drucköffnung 21, 23 eine Ansaugöffnung 22, 24 gegenüberliegt und sich die Druck- und Ansaugöffnungen in Längsrichtung der Bedampfungshaube 10 abwechseln. Die Druck- und Ansaugöffnungen können schlitzförmig ausgebildet sein oder aus mehreren Einzelöffnungen bestehen. Für eine ausreichend hohe Druckenergie der mit Beschichtungsmittel angereicherten Luft sorgen zwei Verdichter 25, 26,die in Strömungsrichtung jeweils vor einer Drucköffnung 21 bzw. 23 angeordnet sind. Die Anreicherung der Luft mit dem Beschichtungsmittel erfolgt über einen Einspeisepunkt 27, der zwischen der Ansaugöffnung 22 und dem Verdichter 26 sitzt.

Zwischem jedem Druck- und Ansaugöffnungspaar entsteht während des Betriebs ein Strömungsbereich, der dafür Sorge trägt, daß die Flaschen 12 von allen Seiten der angereicherten Luft ausgesetzt sind, so daß sich das Beschichtungsmittel gleichmäßig auf der Glasoberfläche ablagern kann. Aufgrund der bestimmten Lage des Einspeisepunktes 27 ist der Anreicherungsgrad des Strömungsbereichs zwischen dem innenliegenden Druck- und Ansaugöffnungspaar 23, 24 höher als bei dem äußeren Öffnungspaar 21, 22. Der äußere Strömungsbereich übt somit neben einer Beschichtungsfunktion gleichzeitig auch noch eine Schutzfunktion aus, indem er einen Luftvorhang bildet.

An den ersten Luftkreislauf 20 schließt in Transportrichtung der Flaschen 12 ein zweiter Luftkreislauf 30 an, der in Anordnung und Aufbau spiegelbildlich zum ersten Luftkreislauf 20 ausgerichtet ist. Das innenliegende Druck- und Öffnungspaar ist mit 33, 34 und das außenliegende mit 31, 32 bezeichnet. Der Verdichter 35 ist dementsprechend vor der Drucköffnung 31 und der Verdichter 36 vor der Drcköffnung 33 angeordnet. Der Einspeisepunkt 37 befindet sich zwischen der Ansaugöffnung 32 und dem Verdichter 36 bzw. der Drucköffnung 33. Der innere Strömungsbereich zwischen dem Druck- und Ansaugöffnungspaar 33, 34 ist dem des Druck- und Ansaugöffnungspaars 23, 24 des Luftkreislaufs 20 entgegengerichtet.

Eine alternative Ausführungsform der Erfindung ist in Fig. 2 dargestellt, die sich von der Anlage nach Fig. 1 darin unterscheidet, daß ein erster Luftkreislauf 40 im Eingangsbereich der Bedampfungshaube 10 insgesamt 4 Strömungsbereiche aufweist. Zu diesem Zweck ist der Luftkreislauf mit zwei zusätzlichen Druck- und Ansaugöffnungspaaren 41', 42' bzw. 43', 44' versehen, die derart zwischen dem äußeren Druck- und Ansaugöff nungspaar 41, 42 und dem inneren Druck- und Ansaugöffnungs paar 43, 44 angeordnet sind, daß die Strömungsbereiche zweier angrenzender Öffnungspaare entgegengerichtet sind und ihr Anreicherungsgrad von innen nach außen abnimmt. Der Luftkreislauf 40 verfügt außerdem über 4 Verdichter 45, 46, 48, 49, und einen Einspeisepunkt 47. Die Verdichter 45, 46 entsprechen in der Anordnung den Verdichtern 25, 26 nach Fig. 1. Der Verdichter 48 sitzt wiederum in Strömungsrichtung vor der Drucköffnung 43' und der Verdichter 49 vor der Drucköffnung 41'. Der Einspeisepunkt 47 befindet sich analog zur Anlage gem. Fig. 1 zwischen der Ansaugöffnung 42 und dem Verdichter 46 bzw. der Drucköffnung 43 des inneren Öffnungspaares. In gleicher Weise wie bei der Anlage nach Fig. 1 ist dem ersten Luftkreislauf 40 in Transportrichtung des Förderbands 11 ein zweiter Luftkreislauf (nicht dargestellt) nachgeschaltet, der wiederum ein Spiegelbild des ersten Luftkreislaufs 40 darstellt und diesem im Aufbau entspricht.

Fig. 3 zeigt in einer Darstellungsweise gemäß Fig. 2 eine weitere Ausführungsform der Erfindung, bei der beide Luftkreisläufe jweils mit nur einem Verdichter bestückt sind. Bei dem dargestellten Luftkreislauf 50 ist daher der Verdichter 55 zweckmäßigerweise an einer zentralen Stelle angeordnet, um möglichst gleichlange Wege zu den beiden Druck- und Ansaugöffnungspaaren 51, 52 bzw. 53, 54 zu erhalten. Um einen maximalen Anreicherungsgrad bei dem innenliegenden Druck- und Ansaugöffnungspaares 53, 54 zu gewährleisten, befindet sich der Einspeisepunkt 57 zwischen dem Verdichter 55 und der Drucköffnung 53. Auch bei dieser Ausführungsform ist im Ausgangsbereich der Bedampfungshaube ein zweiter Luftkreislauf vorgesehen, auf dessen Wiedergabe der besseren Übersichtlichkeit wegen wiederum verzichtet wurde.

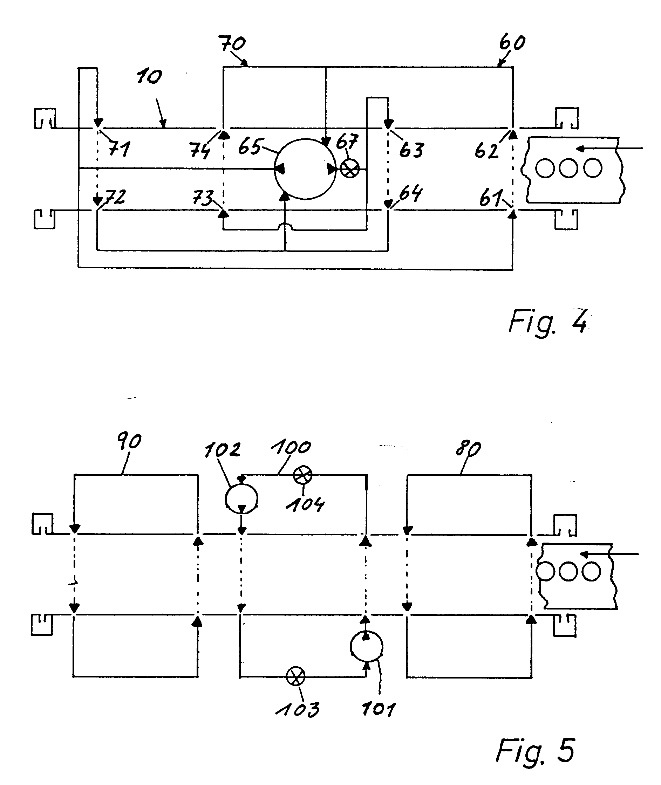

Fig. 4 zeigt eine Alternativform der Erfindung, bei der im Gegensatz zu den bisher gezeigten Anlageformen der erste und der zweite Luftkreislauf 60, 70 zusammengefaßt sind, indem sie gemeinsam über nur einen Verdichter 65 und einen Einspeisepunkt 67 verfügen. Die äußeren Druck- und Ansaugöffnungspaare 61, 62 bzw. 71, 72 erzeugen die Strömungsbereiche mit dem geringsten Anreicherungsgrad, die gleichzeitig einen Luftvorhang zum Schutz der eigentlichen Beschichtungszone bilden. Die beiden Drucköffnungen 63 bzw. 73 der inneren Druck- und Ansaugöffnungspaare 63, 64 bzw. 73, 74 werden über den Einspeisepunkt 67 gemeinsam mit Beschichtungsmittel gespeist, der zu diesem Zweck hinter dem betreffenden Druckausgang des Verdichters 65 liegt. Diese Anlage zeichnet sich insbesondere durch ihre kompakte Bauweise und ihre umweltfreundliche Arbeitsweise aus.

Fig. 5 zeigt schließlich eine Möglichkeit, wie die erfindungsgemäße Heißendvergütungsanlage in der Praxis weiter ausgebaut bzw. variiert werden kann. So kann beispielsweise zwischen einem ersten und einem zweiten Luftkreislauf 80, 90 der Bauart nach Fig. 1 ein (oder mehrere) weiterer Luftkreislauf 100 vorgesehen sein, der in herkömmlicher Bauweise neben zwei Verdichtern 101, 102 auch über zwei Einspeisepunkte 103, 104 verfügt. Auf diese Weise entstehen im Mittelbereich der Bedampfungshaube zwei zusätzliche Strömungsbereiche, die gleich stark mit Beschichtungsmittel angereichert sind.

## Patentansprüche

1. Heißendvergütungsanlage zur Oberflächenvergütung von Glasflaschen mit einer tunnelförmigen Bedampfungshaube, durch die sich in Längsrichtung ein Förderband für den Flaschentransport erstreckt und in deren Seitenwänden eine Mehrzahl von in Abständen paarweise gegenüberliegenden Druck- und Ansaugöffnungen wechselweise angeordnet sind, die entweder alleine oder in Verbindung mit einem weiteren Paar Druck- und Ansaugöffnungen einen mit Beschichtungsmittel angereicherten Luftkreislauf bilden, der mit einem Verdichter zur Erzielung einer ausreichenden Druckenergie der angereicherten Luft ausgerüstet ist, dadurch gekennzeichnet, daß in beiden Außenbereichen der Bedampfungshaube (10) ein Luftkreislauf (20, 30; 40; 50; 60, 70; 80, 90) mit wenigstens zwei Paar Druck- und Ansaugöffnungen (21-22, 23-24 bzw. 31-32, 33-34; 41-42, 43-44; 51-52, 53-54; 61-62, 63-64 bzw. 71-72, 73-74) vorgesehen ist, bei dem die Einspeisung (27 bzw. 37; 47; 57; 67) des Beschichtungsmittels in Strömungsrichtung vor der Drucköffnung (23 bzw. 33; 43; 53; 63 bzw. 73) eines Druck- und Ansaugöffnungspaares erfolgt, das im Innenbereich der Bedampfungshaube (10) angeordnet ist.

2. Anlage nach Anspruch 1, dadurch gekennzeichnet, daß zwischen dem äußeren Druck- und Ansaugöffnungspaar (41-42) und dem inneren Druck- und Ansaugöffnungspaar (43-44) beider Luftkreisläufe (40) zwei weitere Paare von Druck- und Ansaugöffnungen (41'-42'; 43'-44') angeordnet sind.

3. Anlage nach Anspruch 1 oder 2, dadurch gekennzeichnet, daß zwischen den beiden außenliegenden Luftkreisläufen (60, 70) wenigstens ein weiterer Luftkreisluf (100) mit vorzugsweise beidseitiger Anreicherung vorgesehen ist.

4. Anlage Anspruch 1, dadurch gekennzeichnet, daß beide Luftkreisläufe (60, 70) gemeinsam an einen Verdichter (65) angeschlossen sind und die Einspeisung des Beschichtungsmittels gemeinsam über einen Einspeisepunkt (67) erfolgt.

## Claims

1. Hot end coating apparatus to coat surfaces of glass-bottles with a coating hood in form of a tunnel, through which in longitudinal direction a conveyor belt for the bottle-transport is passing, and in the side walls of which there are placed alternatively in distances and in pairs opposite several pressure- and aspiration-vents, which either single or in connection to another pair of pressure- and aspiration-vents form an air-circuit enriched with coating product, which is equipped with a condenser to obtain a sufficient pressure-energy of the enriched air, characterized in, that in both exterior parts of the coating hood (10) an air-circuit (20, 30; 40; 50; 60, 70; 80, 90) is provided with at least two pairs of pressure- and aspiration-vents (21-22, 23-24 resp. 31-32, 33-34; 41-42, 43-44; 51-52, 53-54; 61-62, 63-64 resp. 71-72, 73-74), wherein the feeding (27 resp. 37; 47; 57; 67) of the coating product occurs in flow-direction before the pressure-vent (23 resp. 33; 43; 53; 63 resp. 73) of a pair of pressure- and aspiration-vents, which is placed in the interior part of the coating hood (10).

2. Apparatus as claimed in claim 1, characterized in, that between the exterior pair of pressure- and aspiration-vents (41-42) and the interior pair of pressure- and aspiration-vents (43-44) of both air-circuits (40) are placed two additional pairs of pressure- and aspiration-vents (41'-42'; 43'-44').

3. Apparatus as claimed in claim 1 or 2, characterized in, that between both exterior air-circuits (60, 70) at least one additional air-circuit (100) is provided with feeding preferably from both sides.

4. Apparatus as claimed in claim 1, characterized in, that both air-circuits (60, 70) are connected together to one condenser (65), and the feeding of the coating product occurs together by one feedpoint (67).

## Revendications

1. Appareil pour revêtement à chaud pour le revêtement des surfaces des bouteilles en verre avec une calotte de revêtement en forme de tunnel, par laquelle, dans le sens de la longueur, s'étend un convoyeur à bande pour le transport des bouteilles, et dans les parois latérales de laquelle se trouvent par paires opposés plusieurs orifices de pression et d'aspiration, alternativement placés à distances, lesquels, soit seuls soit en liaison avec une autre paire d'orifices de pression et d'aspiration forment un circuit d'air enrichi avec le produit de revêtement, qui est équipé d'un surpresseur pour obtenir une énergie de pression suffisante d'air enrichi, caractérisé en ce que dans les deux parties extérieures de la calotte de revêtement (10) y est prévu un circuit d'air (20, 30; 40; 50; 60, 70; 80, 90) avec au moins deux paires d'orifices de pression et d'aspiration (21-22, 23-24 resp. 31-32, 33-34; 41-42, 43-44; 51-52, 53-54; 61-62, 63-64 resp. 71-72, 73-74), dans lequel l'alimentation (27 resp. 37; 47; 57; 67) du produit de revêtement se fait en direction du courant avant l'orifice de pression ( 23 resp. 33; 43; 53; 63 resp. 73) d'une paire d'orifices de pression et d'aspiration, qui se trouve dans la partie intérieure de la calotte de revêtement (10).

2. Appareil suivant revendication 1, caractérisé en ce que entre la paire d'orifices de pression et d'aspiration extérieure (41-42) et la paire d'orifices de pression et d'aspiration intérieure (43-44) des deux circuits d'air (40) se trouvent deux autres paires d'orifices de pression et d'aspiration (41'-42'; 43'-44').

3. Appareil suivant revendication 1 ou 2, caractérisé en ce que entre les deux circuits d'air placés à l'extérieur (60, 70), au moins un autre circuit d'air (100) y est prévu avec, de préférence, alimentation des deux côtés.

4. Appareil suivant revendication 1, caractérisé en ce que les deux circuits d'air (60, 70) sont raccordés conjointement à un surpresseur (65), et l'alimentation du produit de revêtement se fait conjointement par un seul point d'alimentation (67).
